# EUROPEAN PATENT APPLICATION

(11) **EP 4 753 305 A1**
(43) Date of publication of application: **03.06.2026**
(21) Application number: 24306982.0
(22) Date of filing: 27.11.2024
(51) Int. Cl.: H04W 12/041, H04W 12/0431, H04W 12/0471, H04L 9/40

(54) **METHOD AND SYSTEM FOR PROVISIONING CREDENTIALS FOR DIRECT COMMUNICATION USING PHYSICAL LAYER SECURITY**

(71) Applicant: THALES DIS FRANCE SAS, 92190 Meudon (FR); THALES, 92190 Meudon (FR)
(72) Inventor: PAULIAC, Mireille, 13470 CARNOUX EN PROVENCE (FR); DANY, Vincent, 13400 AUBAGNE (FR); PANAITOPOL, Dorin, 92250 LA GARENNE-COLOMBES (FR); DELAVEAU, François, 92230 GENNEVILLIERS CEDEX (FR)
(74) Representative: Grevin, Emmanuel

(57) **Abstract**

Disclosed are a method and a system for provisioning credentials for direct communication between a first wireless communication device and a second wireless communication device. Exemplary method comprises establishing a secret key between the first wireless communication device and the second wireless communication device using physical layer security in a V2X (Vehicle-to-Everything) environment. Further, method comprises using the secret key, by the first and second wireless communication devices, to derive one or more keys for establishing the direct communication, or use directly as a shared key for establishing the direct communication.

## Description

### FIELD OF THE INVENTION

The present disclosure relates to wireless communication, and more particularly, to a method and a system for provisioning long-term credentials to establish direct communication between wireless communication entities in V2X (Vehicle-to-Everything), D2D (Device-to-Device), and/or ProSe (Proximity Services) environment.

### BACKGROUND OF THE INVENTION

Existing approaches for establishing direct communication in V2X environment, e.g., vehicle-to-vehicle (V2V), vehicle-to-infrastructure (V2I), vehicle-to-pedestrian (V2P), vehicle-to-device (V2D), and the like, require provisioning of credentials to a communication entity, e.g., a user equipment (UE) or a vehicle, as a necessity. However, such provisioning of credentials for establishing direct communication for V2X, e.g., between vehicles, or between vehicle and traffic light, is still a complex procedure.

The 3GPP specification TS 33.536 "Security aspects of 3GPP support for advanced Vehicle-to-Everything (V2X) services" defines the use of long-term credentials that are provisioned into UEs and form the root of the security of the PC5 unicast link, where PC5 indicates a direct link or interface between V2X UEs. In particular, the long-term credentials and associated authentication method that are used to establish the keys used to protect the PC5 unicast link may either be specified in 3GPP specification or be a method described outside of 3GPP specifications. In the latter case, the document describes that all the authentication is specified to be carried in a generic container (called Key_Est_Info) which is included in message flow for establishment of PC5 security key between UEs during signalling, without providing any details on the manner of establishing credentials as such.

Therefore, in the state of the art, no solution exists that particularly defines how to establish these credentials that are provisioned into UEs and form the root of security of the PC5 unicast link.

### SUMMARY OF THE INVENTION

In some exemplary embodiments, a method is provided for provisioning credentials for direct communication between a first wireless communication device and a second wireless communication device. The method comprises the steps of establishing a secret key between the first wireless communication device and the second wireless communication device using physical layer security (PLS) in a V2X (Vehicle-to-Everything) environment. The method further comprises using the PLS-based secret key, by the first wireless communication device and/or the second wireless communication device, to use as long-term credential to derive one or more keys for establishing the direct communication, or use directly as a shared key for establishing the direct communication, or to establish secure channel to exchange a key for establishing the direct communication.

In some exemplary embodiments, the direct communication is established via a direct interface between the first wireless communication device and the second wireless communication device. The direct interface, for example, may correspond to PC5 interface in V2X communication.

In some exemplary embodiments, the method further comprises pre-configuring one or more master keys in the first wireless communication device.

In some exemplary embodiments, the one or more master keys can be stored in the home network of the first wireless communication device.

In some exemplary embodiments, the method further comprises establishing a secure channel between the first wireless communication device and the second wireless communication device using the PLS-based secret key.

In some exemplary embodiments, the method, after establishing the secure channel using the PLS-based secret key, further comprises sending, by the first wireless communication device, a key derived from the master key(s) to the second wireless communication device using the secure channel.

In some exemplary embodiments, the derived key comprises one or more device identifiers and a session identifier. The device identifiers correspond to at least one of an identity of the first wireless communication device or the second wireless communication device.

In some exemplary embodiments, the stored master key(s) or the derived key is retrieved by an entity in charge of lawful interception (LI), in response to a request for the shared key used for the direct communication between the wireless communication devices.

In some exemplary embodiments, the secret key comprises at least one of a root key, a key derived from the root key, an encryption key, or an integrity key.

In some exemplary embodiments, the first wireless communication device and/or the second wireless communication device comprises a V2X/D2D user equipment.

In some exemplary embodiments, a system for provisioning credentials. The system comprising a first wireless communication device comprising one or more processors and a storage medium communicatively coupled to said one or more processors. Said storage medium comprising one or more executable instructions. The system comprising a second wireless communication device in direct communication with said first wireless communication device. The system comprising at least a communication interface for establishing said direct communication between said first wireless communication device and said second wireless communication device. Further, said one or more processors of said first wireless communication device, upon execution of said one or more executable instructions, are configured to establish a secret key between said first wireless communication device and said second wireless communication device using physical layer security, PLS in a V2X (Vehicle-to-Everything) environment. Furthermore, said one or more processors of said first wireless communication device, upon execution of said one or more executable instructions, are configured to use said secret key, via said at least communication interface, to derive one or more keys for establishing said direct communication, or use directly as a shared key for establishing said direct communication.

### BRIEF DESCRIPTION OF THE DRAWINGS

The examples of the present disclosure are described herein with reference to the accompanying figures. It should be noted that the description and figures relate to exemplary implementations and should not be construed as a limitation to the present disclosure. It is also to be understood that various arrangements may be devised that, although not explicitly described or shown herein, embody the principles of the present disclosure. Moreover, all statements herein reciting principles, aspects, and examples of the present disclosure, as well as specific examples, are intended to encompass equivalents thereof.
- Figure 1 illustrates a diagram schematically exemplifying a communication system to execute implementations, according to an embodiment of the present disclosure.
- Figure 2 illustrates an exemplary method flow for establishing a secret key between UEs using the PLS, according to an embodiment of the present disclosure.
- Figure 3 illustrates another exemplary method flow for establishing a secret key between UEs using the PLS, according to an embodiment of the present disclosure.
- Figure 4 illustrates storage of a master key in a home network of a UE, according to an embodiment of the present disclosure.
- Figure 5 illustrates exemplary method flow for lawful interception to decipher communication between UEs, according to an embodiment of the present disclosure.
- Figure 6 illustrates a flowchart for an exemplary method for establishing a secret key between wireless communication devices, according to an embodiment of the present disclosure.
- Figure 7 illustrates a flowchart for another exemplary method for establishing a secret key between wireless communication devices, according to an embodiment of the present disclosure.
- Figure 8 illustrates a block diagram of a wireless communication device that may be utilized for provisioning credentials, in accordance with implementations of the present disclosure.

### DETAILED DESCRIPTION OF THE PREFERRED EMBODIMENTS

The preferred embodiments according to the present disclosure will be described in detail with reference to appended drawings. The detailed descriptions provided below together with appended drawings are intended only to explain illustrative embodiments of the present disclosure, which should not be regarded as the sole embodiments of the present disclosure. The detailed descriptions below include specific information to provide a complete understanding of the present disclosure. However, those skilled in the art will be able to comprehend that the present disclosure can be embodied without specific information.

For some cases, to avoid obscuring the technical principles of the present disclosure, structures, and devices well-known to the public can be omitted or can be illustrated in the form of block diagrams utilizing fundamental functions of the structures and the devices.

Unless the context indicates otherwise, throughout the specification and claims which follow, the word "comprise" and variations thereof, such as, "comprises" and "comprising" are to be construed in an open, inclusive sense that is as "including, but not limited to." Further, the terms "first," "second," and similar indicators of the sequence are to be construed as interchangeable unless the context clearly dictates otherwise.

As used in the description and the appended claims, the singular forms "a," "an," and "the" include plural referents unless the content clearly dictates otherwise. It should also be noted that the term "or" is generally employed in its broadest sense, that is, as meaning "and/or" unless the content clearly dictates otherwise.

"And/or" for two possibilities means either or both stated possibilities ("A and/or B" covers A alone, B alone, or both A and B take together), and when present with three or more stated possibilities means any individual possibility alone, all possibilities taken together, or some combination of possibilities that is less than all the possibilities. The language in the format "at least one of A ... and N" where A through N are possibilities means "and/or" for the stated possibilities (e.g., at least one A, at least one N, at least one A and at least one N, etc.).

Reference to any "example" herein (e.g., "for example," "an example of," "in an example," or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term.

In order to present a solution to the identified problem of how to establish the credentials that are provisioned into UEs, the present disclosure proposes to rely on physical layer security (PLS) that provides an additional layer of defense besides the conventional cryptographic techniques. More precisely, PLS is used to perform provisioning of credentials for V2X, e.g., between vehicles (V2V), for services such as but not limited to platooning, alerts, and collision avoidance; or between vehicle and traffic light (V2I) for applications such as but not limited to traffic monitoring and/or control, roadside development and/or monitoring, weather updates, and the like.

PLS is a promising approach that can benefit traditional encryption methods. The idea of PLS is to take advantage of the propagation medium's features and radio channel impairments in order to ensure secure communication. PLS is a technology foreseen to address 6G security, e.g., PLS is mentioned in several white papers for 6G technology. For e.g., Apple^{™} proposed to study its usage in the scope of 3GPP in the S3-213987 contribution presented during SA3 November 2021 meeting.

In particular, PLS technology leverages intrinsic randomness properties of a wireless channel to establish a secret between two wireless communication entities, without the need of pre-distributed credentials (e.g., public keys or certificates). An eavesdropper present in the same area cannot guess or retrieve the secret established between the two wireless communication entities. Essentially, as the secret (e.g., key) is derived from the characteristics that are unique to the specific wireless channel and/or associated conditions between the communicating entities, it becomes difficult and very unlikely for the eavesdropper to accurately decode the secret.

More precisely, in PLS-based systems, the legitimate sender and receiver measure the channel characteristics and then use these measurements to derive the secret key. The derivation usually involves quantization by reducing the measurements to discrete values and applying hashing by creating a fixed-size key from the quantized values. Therefore, the legitimate parties derive the key using specific approach or algorithm from such measurements. However, the eavesdropper's similar measurements in an attempt to intercept the secret key would be noisy and inconsistent due to difference in channel conditions. As a result, the data between the legitimate entities remains safe even when the eavesdropper attempts to intercept without the correct key. Accordingly, PLS offers a robust defense against interception by unauthorized entities.

Various embodiments of the present disclosure will now be described with respect to accompanying figures.

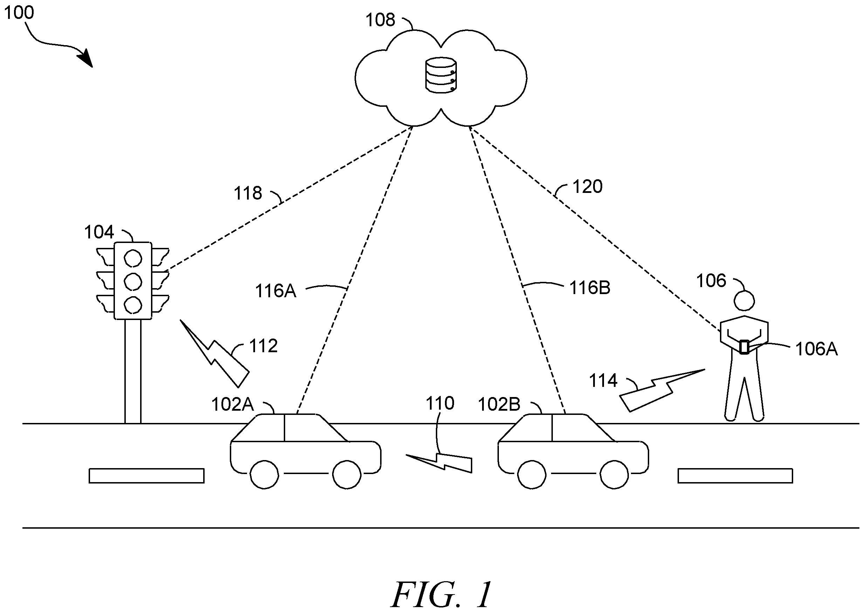

Figure 1 illustrates an exemplary communication system 100 (e.g., V2X system), which encompasses a network of interconnected entities, comprising vehicles 102A-102B, roadside units (RSUs) 104, a pedestrian 106 with communication device 106A, and a communication network 108. The system 100 enables real-time communication and data exchange among the entities to improve traffic safety, optimize traffic flow, enhance the overall driving experience, and the like. Although V2X system 100 is exemplified in Figure 1, the proposed solution(s) of the present disclosure can be extended to D2D and ProSE communication environments without departing from the scope of the description. D2D communication refers to the direct communication between user equipment (UE), such as smartphones or tablets, without routing the data through the core network infrastructure. D2D communication enables devices to communicate directly, which reduces latency, improves spectral efficiency, and conserves network resources. Such communication is particularly useful in environments where traditional network infrastructure is unavailable or insufficient. The D2D communication environment generally comprises multiple UEs that are capable of direct communication. The UEs may establish a direct communication link using a predefined communication protocol (e.g., LTE, 5G NR) over the PC5 interface. The PC5 interface allows for direct communication without involving the Evolved Packet Core (EPC) or 5G Core (5GC) network, thereby reducing the burden on network infrastructure. On the other hand, Proximity Services (ProSe) are a standardized set of features that support D2D communication in LTE and 5G networks. ProSe enables UEs in close proximity to discover and communicate with each other using direct communication links, which can be established using sidelink interfaces, such as PC5. The ProSe framework comprises mechanisms for device discovery, communication authorization, and resource allocation, ensuring secure and efficient communication between devices.

Each of the entities 102A-102B and 104 depicted in Figure 1 are set with an embedded wireless communication end device compliant with V2X standard developed under the framework of cellular technology by 3GPP standardization body. Therefore, these devices in the particular context of V2X standard are referred to as V2X User Equipment (V2X UE) hereinafter. Without limitation, a UE can be a telecommunication terminal with or without a security element such as a UICC, an eUICC (embedded UICC), an iUICC (integrated UICC), or a hardware mediated execution environment (HMEE). The UICC is a smart card used in mobile devices to securely store subscriber information and support network authentication, encryption, and secure access to network services, whereas eUICC is a new generation of UICC that is soldered directly onto a device's circuit board, making it non-removable. The eUICC supports remote SIM provisioning (RSP), allowing over-the-air (OTA) updates to manage Mobile Network Operator (MNO) profiles and subscriptions without physically replacing the card. The iUICC represents a further advancement in SIM technology by integrating UICC functionality directly into the device's System-on-Chip (SoC). Unlike traditional UICCs or even eUICCs, which are separate physical components, the iUICC is embedded within the silicon of the device's main chipset. Further, an HMEE provides a mechanism for executing software code in a protected environment that is isolated from the rest of the system. Such environments are particularly important in scenarios involving sensitive operations, such as cryptographic computations, secure data handling, etc.

In Figure 1, a plurality of vehicles 102A-102B are shown, each may be equipped with an onboard communication module (OCM). OCM is a vehicle-integrated communication module that enables direct and network-assisted communication between a vehicle and other entities within the V2X ecosystem. These modules support various communication protocols, comprising dedicated short-range communications (DSRC). DSRC is a wireless communication technology specifically designed for automotive environments to enable direct communication between vehicles (V2V) and between vehicles and roadside infrastructure (V2I). Operating in the 5.9 GHz band, DSRC supports low-latency, high-reliability communication essential for safety-critical applications. In addition to DSRC, other communication environments that these modules support comprise cellular networks and a direct communication interface such as interface 110, 112, or 114. In an example, the interface 110, 112, or 114 can be PC5 interface. Particularly, the interface 110 enables Vehicle-to-Vehicle (V2V) communication without the need for network infrastructure, thereby allowing vehicles to exchange information such as their current location, speed, direction, or intended manoeuvres, directly with one another. This direct communication is particularly useful in scenarios where low latency is critical, such as collision avoidance.

The RSUs 104 depict smart road facilities such as traffic light (as shown in Figure 1), electronic traffic sign, traffic signal controller, and the like that are installed along the roadside. RSUs104 are equipped with circuitry or communication modules that interface with the communication network 108. These communication modules are responsible for broadcasting the current state of the traffic light (e.g., red, yellow, green) to approaching vehicles (e.g., vehicles 102A-102B). Additionally, the communication modules can receive data from nearby vehicles 102A-102B and adjust the traffic light's timing to optimize traffic flow based on real-time traffic conditions.

Pedestrians 106 are represented as mobile entities within the V2X system 100, each carrying a personal communication device 106A, such as a smartphone. The communication device 106A is capable of communicating with nearby vehicles (e.g., vehicles 102A-102B) and RSUs 104. The system 100 allows pedestrians 106 to broadcast their location and intended crossing manoeuvres to nearby vehicles 102A-102B, enabling the vehicles 102A-102B to take appropriate action, such as slowing down or stopping to allow safe passage.

The communication network 108 serves as the backbone of the V2X system 100, providing the necessary infrastructure to facilitate data exchange among vehicles 102A-102B, traffic lights 104, and pedestrians 106. The communication network 108 may comprise cellular networks, DSRC, Wi-Fi, or other wireless communication technologies. Further, the communication network 108 can also interface with a central traffic management system, which collects and analyzes data from all connected entities (such as vehicles 102A-102B, traffic lights 104, pedestrians 106, etc.) within the V2X system 100 to manage traffic flow and enhance road safety across the entire network.

In some embodiments, the communication network 108 may correspond to a V2X server in a data network. The V2X server can host different application platforms for specific applications and accordingly communicate with various entities. As an example, the V2X server can communicate with respective vehicles 102A-102B through an application (e.g., V2X app) residing therein through a specific interface such as V1. In other embodiments, the communication network 108 may comprise an embedded server or a cloud server.

Each of the vehicles 102A-102B transmit/receive information to/from the communication network 108 through respective communication channels/paths depicted as 116A-116B. Further, RSUs 104 and pedestrian 106, via the communication device 106A, communicate with the communication network 108 through communication channels 118 and 120, respectively, using any of the wireless communication technologies.

The communication interface 110 enables different V2X entities (such as vehicles 102A-102B) to establish a direct communication channel with each other. Further, another communication interface 112 enables direct communication between a vehicle (e.g., vehicle 102A) and traffic light/RSU 104. Furthermore, communication interface 114 enables direct communication between a vehicle (e.g., vehicle 102B) and the communication device 106A associated with the pedestrian 106. Therefore, V2X UEs create a unicast link between one another. However, to establish direct communication therebetween, it is a requirement of V2X standard to offer security measures to protect the unicast link against man-in-the middle attacks, against replay, and to protect privacy. In order to meet these security concerns, 3GPP specifies in Technical Specification TS 33.356 corresponding to V2X security standard, a "security context" for any session on such a unicast link between two V2X UEs i.e., a set of keys organized in a "hierarchy" with "long-term credentials" at its root. In the present context, a key is an integer intended to be shared, i.e., known by the two wireless communication devices that communicate, and to be secret, i.e. to be unknown by any other wireless communication device.

In the present context, a long-term credential is a shared key used to authenticate a wireless communication device by the other one. However, the "long-term" credential is not specified by the current standards. By definition, a long-term credential is intended to be used by the wireless communication device more than once, in several sessions, as opposed to a session key especially generated for the duration of a session and deleted at the end of the session.

The present disclosure proposes to use PLS and Security Knowledge Graph (SKG) framework to generate or share a secret key and provision long-term credential for a given pair of V2X UEs and more generally for a pair of wireless communication devices.

Using PLS with SKG is to establish keys (integers) from the channel state (or at least one physical property of the channel). In order to perform the channel estimation, each of the wireless communication devices may, for instance, directly measure the reference signals, (primary or secondary) synchronization signals or other pilot signals, e.g., DM-RS or others, normally sent on the PC5 V2X radio interface for the sidelink between the two wireless communication devices. The channel estimation may also be performed indirectly if each of the wireless communication devices is using an interface such as Uu radio interface (i.e., between UE and Base Station eNB/gNB) to send Sounding Reference Signals (SRS). Then, if each of the UE transmits in UpLink the SRS towards its own eNB/gNB, the other UE can measure directly the Uu UpLink SRS (and not the PC5 V2X signal pilots) and derive a secret key even before the PC5 V2X interface is activated for the first time. Similarly, DM-RS Uu or other Uu UpLink reference signal can also be used. In this case, the V2X UEs do not necessarily need to transmit a radio signal on the PC5 V2X interface to derive the secret key. Moreover, regardless of the estimation technique e.g., on Uu or PC5 or WiFi radio interface or others, the base station (same or different base station per UE) can provide to each of the UEs the time interval during which the pairing or channel estimation between two UEs/end devices should be performed. Such information may be sent in a secured manner using RRC or NAS protocol messages or could be preconfigured on the devices following a certain protocol based on (system) frame number, sub-frame number, slot number or symbol number in which the reference signals are sent.

Further, using PLS with Secret Coding (SC) is to establish secret codes that mitigate information disclosed to a third party while correcting transmissions errors between the legitimate parties, and then to transmit secret keys in a confidential manner by using these secrets codes.

Furthermore, using Tag Signal with Interrogation and Acknowledgement Sequence (IAS) is to establish acknowledged Tags Signals that remain not detectable by any third party. Tag signal can be used as integrity plus ciphering header in a symmetric secure scheme. Further, the tag signal can be used as an Air Interface Encryption (AIE) to scramble secret keys when transmitted over the air between legitimate parties, and can also support the establishment of secret codes.

Specific embodiments describing the usage of PLS with SKG framework to generate a secret key will now be described with respect to accompanying figures.

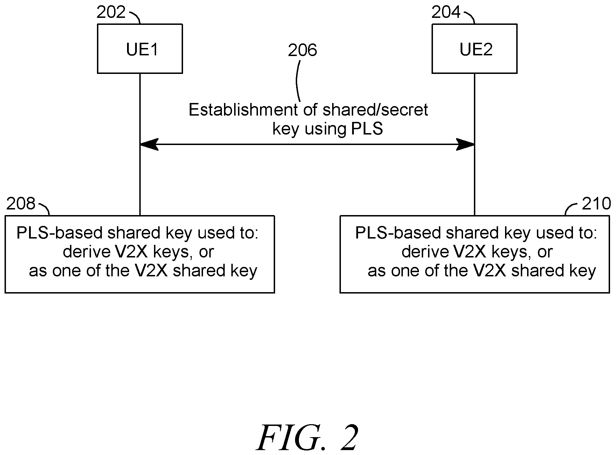

Figure 2 illustrates an exemplary method flow for establishing a secret key between V2X entities (such as vehicles 102A-102B) using the PLS, according to an embodiment of the present disclosure.

As depicted in Figure 2, at a high-level, a V2X UE1 202 (such as vehicle 102A) uses PLS to send a direct communication request to a V2X UE2 204 (such as vehicle 102B). UE2 204, upon receiving the request, may choose to respond and may initiate the key establishment procedure (step 206) to generate a PLS-based shared secret key that serves as a shared secret between the communicating entities.

To generate the PLS-based shared secret key in step 206, initially, the communicating UEs, i.e., V2X UE1 202 and V2X UE2 204 may perform channel measurements. As an example, the channel conditions can be measured, e.g., by sending and receiving pilot signals or training sequences, to identify channel attributes/parameters and estimate the channel state information (CSI). Next, V2X UE1 202 and V2X UE2 204 can exchange CSI through signalling messages either directly or via a central network entity. By leveraging the randomness in the physical channel's parameters/properties/measurements, the exchange of CSI enables generation of a secret key. For example, the secret key may be generated using cryptographic hash functions, quantization, and/or physical layer aided authentication and key agreement (PL-AKA) protocols. The generated key is utilized for encrypting and authenticating communication between V2X UE1 202 and V2X UE2 204. As an additional step, the generated key's integrity may be confirmed by additional signalling to verify that both the UEs have the same key.

At step 208 of Figure 2, the PLS-based secret key can be used as a long-term credential to derive a V2X shared key for direct communication interface 110 (PC5), which is used for establishing direct communication between UE1 202 and UE2 204. Advantageously, step 210 describes that the PLS-based secret key can also be directly used as a V2X shared key for direct communication interface 110 (PC5) for establishing direct communication.

In accordance with the key hierarchy defined in 3GPP specification TS 33.536, different layers of keys may be utilized for PC5 unicast link facilitating direct communication between V2X UEs. The different layers of keys may comprise long-term credentials, root key (e.g., K_{NRP}), session key (e.g., K_{NRP-sess}), encryption key (e.g., NR PC5 Encryption Key (NRPEK), and integrity key (e.g., NR PC5 Integrity Key (NRPIK)). Within context of V2X communication described in this document, long-term credentials are provisioned into the UEs to generate the root key, which is shared between the two entities communicating using NR PC5 unicast link. The root key may be further used to derive session key, which in turn is used to derive actual encryption and integrity keys utilizing chosen confidentiality and integrity algorithms respectively for protecting PC5-S signalling, PC5 RRC signalling, and PC5 user plane data.

In view of the foregoing embodiments, the PLS-based secret key can be utilized as one of the keys in the key hierarchy discussed above, in order to establish direct V2X/D2D communication between UEs, without the need of undergoing complex signalling procedure. As an example, the PLS-based secret key can have attributes similar to the root key in the key hierarchy to derive further one or more keys that are used to establish direct V2X/D2D communication on the PC5 interface/V2X layer between UEs. As another example, the PLS-based secret key can have attributes similar to the session key in the key hierarchy that is used to secure communication session established between UEs for V2X/D2D communication. As yet another example, the PLS-based secret key can have attributes similar to the encryption or integrity key in the key hierarchy that are used for PC5 signalling between UEs.

In the method described in Figure 2, as an advantage, there is no need to pre-configure the communicating UEs (UE1 202 and UE2 204) with any credentials to establish V2X/D2D key hierarchy for direct communication between V2X/D2D UEs 202 and 204. Accordingly, the proposed solution in Figure 2 saves signalling, processing, and storage requirements at UE's end.

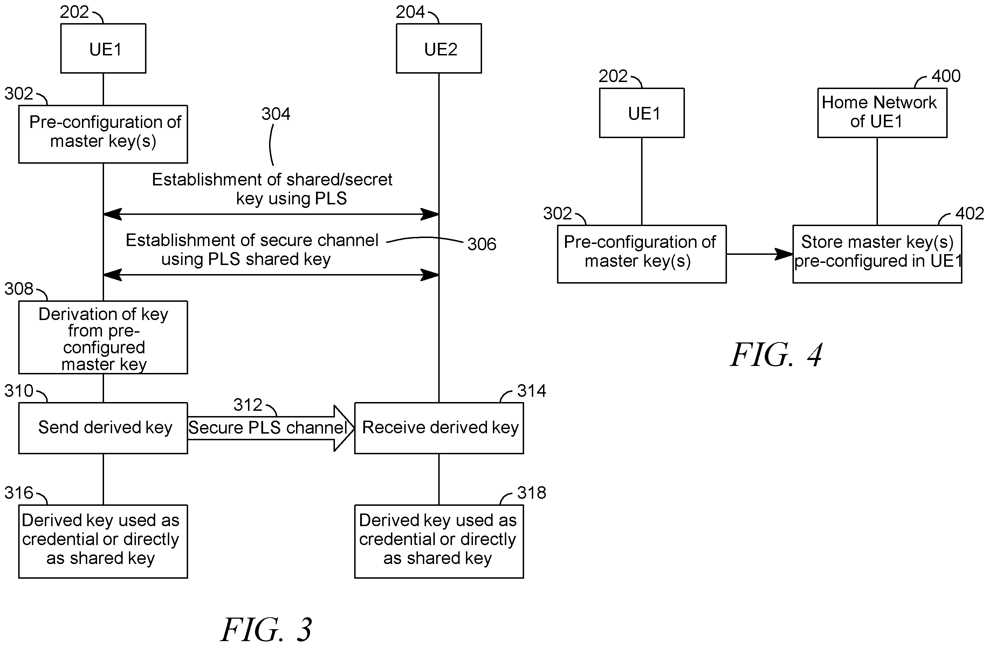

Figure 3 illustrates another exemplary method flow for establishing a secret key between UEs using the PLS, according to an embodiment of the present disclosure. The method flow depicted in Figure 3 is different from that of Figure 2 such that in Figure 3, a master key is pre-configured as a pre-requisite requirement at step 302. The process of pre-configuration and storage of the master key is explained later with reference to Figure 4.

Similar to step 206 of Figure 2, a shared secret key is established between UE1 202 and UE2 204 using PLS at step 304. The signalling steps for establishment of PLS-based shared secret key are similar to those described with reference to step 206 previously. The PLS-based key, in an exemplary scenario, established between vehicles in vehicular network, may be derived by hashing each of the vehicle's quantized CSI vectors. By way of key agreement between the communicating vehicles, both vehicles may derive the same key value.

At step 306, the established PLS-based shared secret key is utilized by the communicating UEs to establish a secure communication channel therebetween. The secure communication channel is a result of successful handshaking between UE1 202 and UE2 204 via exchange of signalling information.

After the secure communication channel is established, at step 308, UE1 202 derives a key, from the pre-configured master key at step 302, to be shared with the other UE (e.g., UE2 204). The derived key is generated using the master key and other parameters, such as random values or nonces, through cryptographic algorithms. This ensures that each session or communication channel has its own unique set of keys, thereby enhancing security. Each derived key serves a specific purpose in the security architecture. For instance, in various communication technologies, different derived keys are used for encrypting the signalling and user data and for ensuring data integrity.

In an embodiment, the key derivation process, at step 308, may involve generating one or more session keys from the pre-configured master key. The key derivation process involves selecting a KDF suitable for the security requirements. For example, the KDF may comprise HMAC, HKDF (HMAC-based Key Derivation Function), etc. Further, the key derivation process requires master key from which derived key(s) will be generated, input parameters (or contextual information), and optional key labels that specify the type of derived key (e.g., encryption key, integrity key, etc.). The input parameters may comprise device or UE identifiers (ID) corresponding to UE1 202 or UE2 204, and a session ID. The device identifier may be associated with a unique identity of UE1 202 or UE2 204.

In an embodiment, the device identifier may be International Mobile Subscriber Identity (IMSI). IMSI is a unique identifier assigned to each mobile subscriber within a network. In V2X communication network, as an example, IMSI serves as a unique identifier for vehicles or devices. Typically, IMSI is stored on the Subscriber Identity Module (SIM) card and comprises a combination of the Mobile Country Code (MCC), Mobile Network Code (MNC), and Mobile Subscriber Identity Number (MSIN).

In another embodiment, the device identifier may be International Mobile Equipment Identity (IMEI). IMEI is a unique number assigned to each mobile device, comprising the devices used in V2X communication network. IMEI is typically a 15-digit number, comprising first eight digits of Type Allocation Code (TAC) identifying the device model and manufacturer, following six digits providing a unique Serial Number (SR) for the device, and final digit called Check Digit (CD) being used for error detection and validation of the IMEI. In V2X communication network, IMEI may be assigned for each device, such as a vehicle's onboard unit or a V2X communication module, as described with reference to Figure 1. As an example, when a vehicle with an onboard unit equipped with V2X communication capabilities connects to the network, its IMEI can be used to identify the device.

In yet another embodiment, the device identifier may be Cellular Vehicle-to-Everything (C-V2X) identifier. C-V2X is defined by the 3rd Generation Partnership Project (3GPP) and operates over both direct communication (without relying on the cellular network) and network-based communication (through the cellular network). C-V2X identifier uniquely identifies each device participating in C-V2X communication, comprising vehicles, RSUs, and other infrastructure components. Typically, C-V2X identifier comprises a combination of device-specific attributes, network-related information, and standardized identifiers.

In yet another embodiment, the device identifier may be Subscription Permanent Identifier (SUPI). SUPI is typically formatted as a globally unique identifier, such as an IMSI or a private identifier, depending on network configuration and privacy requirements. In V2X communication network, SUPI serves as a unique identifier for each V2X device or vehicle within the network. As an example, a vehicle equipped with V2X communication capabilities will have a SUPI that the network uses to identify and manage that specific vehicle.

Other device identifiers, apart from those discussed above, may be implemented without departing from the scope of the present disclosure.

Additionally, or alternatively, the input parameters in the key derivation process may comprise random values or nonces.

Accordingly, in the key derivation process, at step 308, the KDF is used to process the master key along with the input parameters to generate the derived key(s).

Although step 308 is depicted after steps 302, 304, and 306 in the method flow, this step may occur before the specified order.

At step 310, the derived key generated at step 308 is sent, via secured PLS channel 312 (previously established at step 306), from UE1 202 to UE2 204. The receipt of derived key by UE2 204 is depicted by step 314. Thus, each UE is provisioned with the same derived key by means of secure PLS channel 312.

Subsequently, either of UEs, at respective steps 316 and 318, can utilize the derived key either to be used as a credential (e.g., long-term credential) or can be advantageously used directly as a shared key (e.g., V2X/D2D keys) for direct interface (PC5) in V2X/D2D communication.

Figure 4 illustrates storage of a master key in a home network of a UE, according to an embodiment of the present disclosure. As briefly discussed at step 302, the method flow of Figure 4 requires pre-configuration of a master key in a UE (e.g., UE1 202) to enable derivation of other keys that are used for V2X/D2D communication between UE1 202 and UE2 204. The pre-configured master key in UE1 202 is stored at step 402 in home network 400 of UE1 202. The home network 400 of UE1 202 may comprise a network node such as Authentication Credential Repository and Processing Function (ARPF) or Unified Data Management (UDM), or Authentication Center (AuC), or a private network hosting radio network/core network nodes pertaining to wireless communication technologies (e.g., LTE, 5G, or 6G). For example, UDM manages, and stores data related to device profiles, comprising authentication credentials (e.g., cryptographic keys such as master key, private key, etc.) and service information. UDM verifies the credentials, authenticates the device, and grants access based on the subscription and policy. ARPF is a functional element of the UDM, which is responsible for generating 5G HE AV (5G Home Environment Authentication Vectors) based on the subscriber's shared secret key. As another example, AuC manages authentication credentials, such as IMSI and cryptographic keys, used for authenticating V2X devices. AuC stores and processes the credentials of vehicles to verify their authenticity before allowing them to engage in V2X communications. In 5G networks, AuC collaborates with the UDM to validate device credentials and enforce security policies during V2X communication. In certain embodiments, the home network of V2X UE (e.g., 400 of UE1 202) may be cloud-native and manage network user data in a centralized element. The data stored in the home network 400 may comprise authentication and/or encryption keys utilized for confidentiality and integrity protection of data and to verify the legitimacy of UE identity.

It should be noted that the master key is pre-configured in one of the two UEs in communication with each other. As described herein, the master key is pre-configured in UE1 202, but not pre-configured in UE2 204. Accordingly, the pre-configured master key is stored in the home network 400 which is associated with UE1 202 hosting the pre-configured master key. Although Figure 4 is described in context of the master key being pre-configured in UE1 202 and stored in the home network 400 of UE1 202, however, without limitation the master key may be alternatively pre-configured in UE2 204 and stored in its corresponding home network instead of pre-configuring the master key in UE1 202 and its corresponding home network.

Further, without departing from the scope of the present disclosure, one or several master keys may be pre-configured in one of the two communicating UEs (e.g., UE1 202) to establish secure channel using PLS.

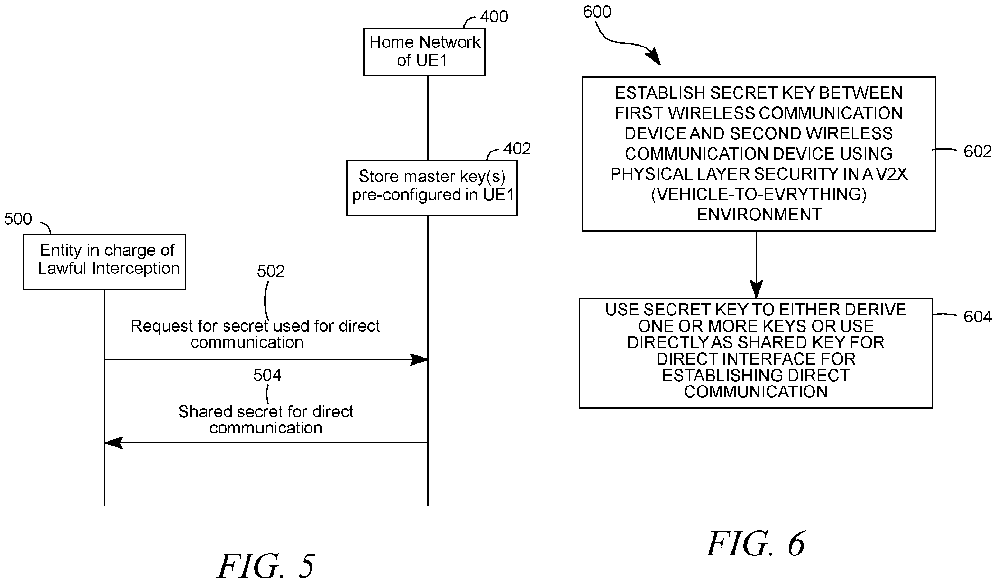

Figure 5, as depicted, illustrates an entity in charge of lawful interception (LI) 500 that utilizes the pre-configured master key of UE1 202 for a specific implementation of deciphering communication between UE1 202 and UE2 204. In particular, LI 500 refers to an entity which is authorized to access and monitor communications for specific purposes defined by law. The specific purposes may comprise but are not limited to national security, crime investigation, public safety, proof of evidence, and the like. LI 500, in its capacity, may intercept data or forward data to third parties depending on the specific purpose.

Returning to Figure 5, step 402 is same as that depicted in Figure 4, and is not explained again for the sake of brevity. LI 500, at step 502, may request the home network 400 of UE1 202 for secret used for direct communication between UEs 202 and 204. The secret may comprise the pre-configured master key or derived key (discussed in previous figures) that is utilized for V2X/D2D communication between UE1 202 and UE2 204. In response to the request from LI 500, at step 504, the home network 400 may retrieve the pre-configured master key of UE1 202. LI 500, depending on the stored credentials in the home network 400 of UE1 202, may retrieve the shared secret which may comprise stored master key or any derived key to decipher communication between the UEs 202 and 204. Without departing from the scope of the present disclosure, LI 500 may access any authentication or security-related data from the home network of a UE depending on the use case.

Therefore, the present solution discussed in figures 3-5 fulfills lawful interception requirements to decipher communications between V2X/D2D devices, when needed.

In the example methods discussed for V2X/D2D communication in Figures 2-5, the fact that the secret key is established using PLS at the physical layer level and the V2X/D2D key(s) are established at the PCS interface level using the PLS-based secret key, simplifies the process of provisioning long-term credentials to UEs for direct V2X/D2D communication. Further, PLS technology utilizes the channel attributes, transmitter/receiver attributes, and secrecy metrics for achieving better key management and distribution, reduced power consumption and processing restriction at transmitter and receiver side, and enhanced security control for data exchange over conventional approaches.

Figure 6 illustrates a flowchart 600 for an exemplary method for establishing a secret key between wireless communication devices, according to an embodiment of the present disclosure. Flowchart 600 will be explained in conjunction with the previous figures.

At step 602, a secret key is established between a first wireless communication device and a second wireless communication device using physical layer security. In embodiments, the first wireless communication device and the second wireless communication device may correspond to a UE within V2X/D2D/ProSe environment. As examples, the first or second wireless communication device may correspond to vehicle 102A, vehicle 102B, RSU 104, or communication device 106A that communicate with each other via direct interface(s). The secret key is established between these wireless communication devices using PLS, which makes use of the randomness attributes of the wireless channel between these entities. Such channel attributes may comprise received signal strength (RSS), power spectral density (PSD), CSI, channel power delay profile (PDP), channel frequency response (CFR), among others. Ensuring the security and privacy of these communications at the physical layer can significantly enhance the overall security and reliability of the network. In embodiments, applying encryption techniques directly at the physical layer to protect data from unauthorized access can comprise applying sophisticated coding schemes and encryption algorithms designed for high-speed communication.

In different embodiments, as previously described with reference to Figure 2, the secret key established, at step 602, may be a root or master key, session key, encryption key, or an integrity key, among other variations.

Once the secret key is established, at step 604, the established key is utilized to either derive one or more keys for direct communication between wireless devices (or UEs) or used directly as the shared key for direct interface to establish direct communication. In embodiments, the direct interface may correspond to any of interfaces 110, 112, and 114 (described previously in Figure 1) depending on the wireless devices involved in direct communication. The PLS-based secret key may be directly used for PC5 interface between the wireless devices or entities (e.g., vehicles) for direct communication without involvement of any network node. Alternatively, the PLS-based secret key may be used as long-term credential to derive other keys by using identifiers and authentication signalling between the wireless devices.

In an embodiment, when the secret key established between the wireless entities is a root key or master key, then the root key may be used to derive one or more keys (e.g., session keys) for direct communication between the wireless devices using key derivation process described previously using suitable KDF and key protocol algorithms. In another embodiment, when the secret key established between the wireless entities is a session key, then the session key may be used directly as a shared key for direct interface to establish direct communication between the wireless devices. The session key may be derived from the master key for specific communication sessions between the wireless devices. To maintain security, the session key may be refreshed periodically during extended sessions. This involves generating a new session key and updating both wireless entities or UEs. Further, UEs can re-negotiate session keys if the original key is compromised or if security conditions change. In yet another embodiment, when the secret key established between the wireless entities is an encryption or integrity key, then the encryption or integrity key may be used directly as a shared key for direct interface to establish direct communication between the wireless devices.

Various embodiments presented herein elucidate the usage of PLS-based secret key as shared V2X/D2D key for V2X/D2D communication via direct interface. This feature opens a variety of applications in the realm of vehicular networks involving real-time and high-speed communication. Low-latency communication paths established via the present solutions enable real-time autonomous driving, efficient road/traffic monitoring, issuance of alerts related to road conditions/traffic, collision avoidance, and platooning.

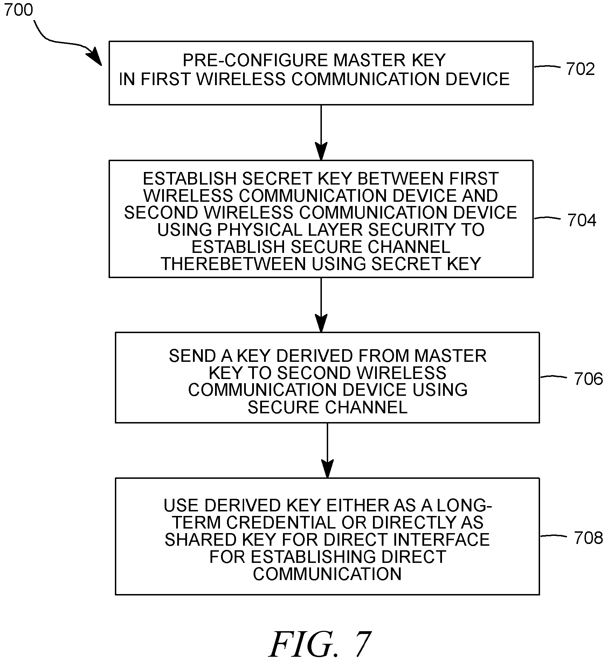

Figure 7 illustrates a flowchart 700 for another exemplary method for establishing a secret key between wireless communication devices, according to an embodiment of the present disclosure. Flowchart 700 will be explained in conjunction with the previous figures. Although the example method utilized for flowchart 700 depicts a particular sequence of operations, the sequence may be altered without departing from the scope of the present disclosure. For example, some of the operations depicted may be performed in parallel or in a different sequence that does not materially affect the function of the flowchart 700. In other examples, different components of an example apparatus or system that implements the flowchart 700 may perform functions at substantially the same time or in a specific sequence.

Initially, at step 702, a master key is pre-configured in a first wireless communication device. Pre-configuring involves embedding or securely loading the master key into the device's hardware or software prior to its deployment or usage. In embodiments, a vehicle or UE in V2X/D2D communication can be configured with a master key, which may function as a fundamental cryptographic key used as the basis for generating other keys (e.g., session key, encryption key, integrity key). In some embodiments, the master key may be pre-configured into the first wireless communication device during the manufacturing process. This involves securely programming the master key into the device's hardware or firmware before the device is shipped to end-users. In alternate embodiments, the provisioning of master key into the first wireless communication device may occur post manufacturing. The master key can be provisioned or updated remotely via Over-The-Air (OTA) mechanisms, which allows for secure updates to the master key without physical access to the device.

At step 704, a secret key is established between the first wireless communication device and the second wireless communication device using physical layer security. This step is similar to step 602 discussed previously with reference to Figure 6, so details are omitted for the sake of brevity. The established secret key is utilized to establish a secure channel between the communication devices.

At step 706, a key is derived from the master key by the first wireless communication device and transmitted on the secure channel to the second wireless communication device. The process of key derivation from the master key herein is similar to step 308 discussed previously with reference to Figure 3 so details are omitted for the sake of brevity. The transmission of the derived key from the first wireless communication device to the second wireless communication device is to ensure that the key was derived correctly. This may comprise verifying the integrity of the derived key or confirming its authenticity. In the embodiments discussed herein, sharing the derived key between both the communication devices at the physical layer ensures confidentiality, integrity, and authentication along with mitigating interference or attacks on channel security. The derived key, for example, can be a session key, encryption key, integrity key, and the like.

Further, the derived key, at step 708, is either used as a credential (e.g., long-term credential) or directly used as a shared key for direct interface to establish direct communication. The derived key may be used for ongoing operations rather than for individual communication sessions between the first and second wireless communication devices. By using the derived key as long-term credential, exchange of complex authentication signalling between the UEs is simplified to an extent.

By using the shared secret key, as described in various embodiments, direct communication is facilitated between the wireless devices (e.g., V2X UEs) via PC5 interface (e.g., in V2X environment). Several types of data can be transferred between V2X UEs on PC5 interface such as but not limited to traffic management messages, basic safety messages, emergency vehicle warning messages, cooperative awareness messages (CAMs), application-specific data, multimedia content, control and management messages, security-related messages, and the like.

The traffic management messages are used to communicate traffic control information, such as traffic light phases, road closures, speed limits, traffic advisories, congestion warnings, and the like. For example, a V2X UE may communicate a message related to an upcoming red light or a road closure to another approaching V2X UE in V2X network.

The basic safety messages are used to share information about the vehicle's state. The content of such messages may comprise data related to vehicle's location (e.g., GPS coordinates), velocity, acceleration, and other parameters necessary for collision avoidance and situational awareness. For example, a V2X UE may broadcast its position and speed to other vehicles and RSUs to prevent collisions and improve traffic flow.

The emergency vehicle warning messages may be used to notify other road users about the presence and location of emergency vehicles, such as ambulances, fire trucks, or police cars. Such messages may comprise emergency vehicle's location, direction, and intended route. For example, an ambulance with a patient may broadcast its location and intended route to ensure other nearby vehicles do not block the route, ensuring a clear passage for the ambulance to the medical facility. The role of emergency vehicle warning messages is critical in time-sensitive and life-threatening situations when the patient needs immediate care.

CAMs comprise data related to vehicle identification, position, speed, and other dynamic information such as vehicle's intended actions or manoeuvrers. Such messages may be shared with nearby vehicles and infrastructure in V2X environment to enhance situational awareness. For example, a V2X UE may send a CAM to alert nearby vehicles about its lane change intention. Such a timely message from one V2X UE to another nearby V2X UE can prevent collisions and road accidents, thereby improving road safety.

V2X UEs can exchange application-specific data to support one or more V2X applications. Such data may comprise data related to ride-sharing, parking, tolls, road surveillance cameras, nearby restaurants, nearby medical aid, among others. For example, V2X UEs may exchange data to coordinate platooning or ride-sharing.

Further, V2X UEs may exchange multimedia content such as music, videos, or maps, directly with other vehicles or passengers for infotainment or navigation control. For example, a V2X UE may share navigation route details with another V2X UE to convene at a common destination.

The control and management messages may be exchanged for efficient usage of PC5 interface. Such messages may be related to allocation of communication channel, synchronization information, and the like. For example, V2X UEs may coordinate to avoid interference.

Additionally, V2X UEs may exchange security-related messages such as credentials or certificates for verifying the identity of vehicles and ensuring authorized access. For example, V2X UEs may exchange authentication tokens to establish trust before sharing sensitive data.

The data communication between V2X UEs using the above data types are crucial for the effective operation of V2X communication network, thereby enhancing safety, efficiency, and overall user experience on the road.

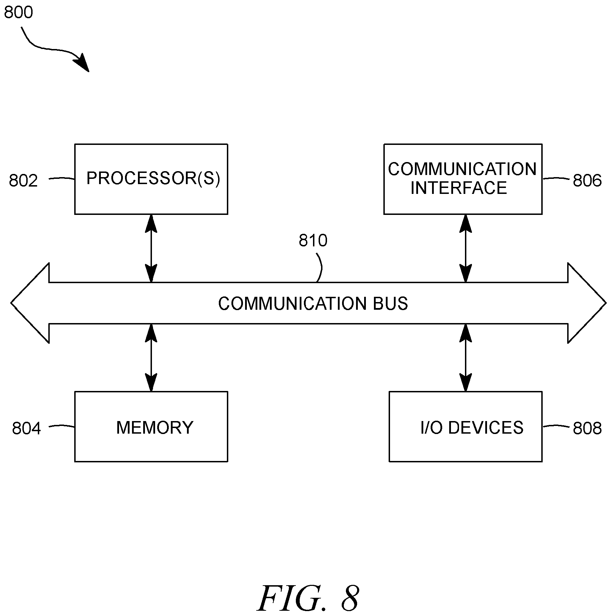

Figure 8 illustrates a block diagram of a wireless communication device 800 that may be utilized for provisioning credentials, in accordance with implementations of the present disclosure. In some embodiments, the wireless communication device 800 may correspond to V2X UE (e.g., vehicles 102A-102B, UE1 202, UE2 204), RSU 104, communication device 106A, or any wireless entity with capability to establish communication with another entity in V2X/D2D/ProSe networks. In other embodiments, the wireless communication device 800 may implement a function of the V2X server 108, which may be a general-purpose server or a dedicated server.

The wireless communication device 800 comprises processor(s) 802, memory 804, a communication interface 806, and input/output devices 808. Each of these components may be operatively coupled to a communication bus 810, which may be configured, e.g., for optical and/or electrical communication.

The processor(s) 802 may comprise a central processing unit, application-specific integrated circuit (ASIC), digital signal processor (DSP), or another type of processing circuit. The processor(s) 802 may be implemented using mainframe, distributed processor, multi-core, parallel, grid, or other architectures. The processor(s) 802 may be configured to implement the functions, procedures, and/or methods proposed by the present disclosure as described in Figures 1 to 7. Further, layers of a wireless interface protocol may be implemented by the processor(s) 802.

Memory 804 may be any suitable medium that participates in providing instructions to the processor(s) 802 for execution. For example, the memory 804 may be non-transitory or non-volatile medium, such as a magnetic disk or solid-state non-volatile memory or volatile medium such as random-access memory (RAM). The instructions or modules stored on memory 804 may comprise machine-readable instructions executed by the processor(s) 802 that cause the processor(s) 802 to perform the methods and functions for provisioning credentials.

Further, the memory 804 may be communicatively coupled to the processor(s) 802 and store information related to operations of the processor(s) 802. The memory 804 may be located inside or outside the processor 802 and may be connected to the processor(s) 802 through various well-known means.

The communication interface 806 may use any apparatus such as a transceiver or an RF module to communicate with another device or a communication network such as the Ethernet, a radio access network (RAN), or a wireless local area network (WLAN). In other examples, the communication interface 806 may be a Local Area Network (LAN) interface, a wireless 802.11x interface, a 3G, 4G, 5G, or 6G mobile WAN or a WiMax WAN.

The input/output devices 808 may comprise one or more input and output devices. The input device may be a keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. The output device may be a printer, fax machine, video display, liquid crystal display (LCD), light-emitting diode (LED), Organic-LED (OLED), Quantum Dot Light Emitting Diode (QLED), Micro LED, Mini-LED, Quantum Dot OLED (QD-OLED), audio speaker, etc.

There may be other modules, circuitry, and/or components that may be included in the wireless communication device 800 but are not depicted for the sake of conciseness. For example, a communication module (as previously described with reference to Figure 1) may be included for handling communications with other wireless devices (e.g., UEs, vehicles, etc.) and infrastructure. Further, a navigation module may be included for location services, route mapping, and guidance. Furthermore, various sensors may be present within the wireless communication device 800 to collect data from its ambience (e.g., vehicular environment).

Although Figure 8 is depicted with respect to a single wireless communication device, it will be apparent that a system comprising plurality of wireless communication devices (e.g., UE1 202 and UE2 204) may be implemented with each device communicating with the other device via known communication technologies using suitable communication interfaces.

The present disclosure is applicable to various wireless communication systems such as but not limited to 3GPP LTE/LTE-A, 5G, and 6G systems, and should be interpreted accordingly.

Further, the present disclosure can be applied to many earth to earth transmission such as but not limited to BlueTooth or BlueTooth Low Energy (BLE) wireless devices and communications, IoT, WLAN, HyperLAN, and the like.

Additionally, the present disclosure can be applied to Aeronautic communications such as but not limited to communications used in Air Traffic Management Systems (ATM) or Air Traffic Control (ATC) communication systems.

Implementations and all of the functional operations described in this description may be realized in digital electronic circuitry, or in computer software, firmware, or hardware, including the structures disclosed in this description and their structural equivalents, or in combinations of one or more of them.

The foregoing discussion of the disclosure has been presented for purposes of illustration and description. The foregoing is not intended to limit the disclosure to the form or forms disclosed herein. In the foregoing detailed description for example, various features of the disclosure are grouped together in one or more examples, configurations, or aspects for the purpose of streamlining the disclosure. The features of the examples, configurations, or aspects of the disclosure may be combined in alternate examples, configurations, or aspects other than those described above. Hence, the present disclosure and drawings should not be considered in a limiting sense, as it is understood that an invention presented within a disclosure is in no way limited to those examples specifically illustrated.

Accordingly, the above description and any accompanying drawings, illustrations, and figures are intended to be illustrative but not restrictive. The scope of any invention presented within this disclosure should, therefore, be determined not with simple reference to the above description and those examples shown in the figures, but instead should be determined with reference to the pending claims along with their full scope or equivalents.

## Claims

1. A method for provisioning credentials for direct communication between a first wireless communication device (202) and a second wireless communication device (204), said method comprising:
establishing (206; 304) a secret key between said first wireless communication device (202) and said second wireless communication device (204) using physical layer security, PLS in a V2X (Vehicle-to-Everything) environment; and
using (208, 210; 316, 318) said secret key, by said first wireless communication device (202) and/or said second wireless communication device (204), to:
derive one or more keys from said secret key for establishing said direct communication, or
use directly as a shared key for establishing said direct communication.

2. The method according to claim 1, wherein said direct communication is established via a direct interface, said direct interface comprising a PC5 interface (110) between said first wireless communication device (202) and said second wireless communication device (204).

3. The method according to any previous claims, further comprising pre-configuring (302) a master key in said first wireless communication device (202).

4. The method according to claim 3, wherein said master key is stored in a home network (400) of said first wireless communication device (202).

5. The method according to claim 4, further comprising establishing (306) a secure channel between said first wireless communication device (202) and said second wireless communication device (204) using said secret key.

6. The method according to claim 5, further comprising sending (310), by said first wireless communication device (202), a key derived from said master key to said second wireless communication device (204) using said secure channel.

7. The method according to any of claims 1 to 6, wherein at least one of said stored master key or said derived key is retrieved by an entity in charge of lawful interception, LI (500), in response to a request (502) for said one or more keys or said shared key used for said direct communication between said first wireless communication device (202) and said second wireless communication device (204).

8. The method according to claim 6, wherein said derived key comprises one or more of device identifiers and a session identifier.

9. The method according to claim 8, wherein said device identifiers correspond to at least one of an identity of said first wireless communication device (202) or said second wireless communication device (204).

10. The method according to any previous claims, wherein said secret key comprises at least one of a root key, a key derived from said root key, an encryption key, or an integrity key.

11. The method according to any previous claims, wherein said first wireless communication device (202) and/or said second wireless communication device (204) comprises a device-to-device, D2D, user equipment, UE.

12. A system for provisioning credentials, said system comprising:
a first wireless communication device (202) comprising one or more processors (802) and a storage medium (804) communicatively coupled to said one or more processors (802), said storage medium (804) comprising one or more executable instructions;
a second wireless communication device (204) in direct communication with said first wireless communication device (202); and
at least a communication interface (806) for establishing said direct communication between said first wireless communication device (202) and said second wireless communication device (204),
wherein said one or more processors (802) of said first wireless communication device (202), upon execution of said one or more executable instructions, are configured to:
establish a secret key between said first wireless communication device (202) and said second wireless communication device (204) using physical layer security, PLS in a V2X (Vehicle-to-Everything) environment; and
use said secret key, via said at least communication interface (806), to derive one or more keys for establishing said direct communication, or use directly as a shared key for establishing said direct communication.

13. The system according to any previous claims, wherein said first wireless communication device (202) and/or said second wireless communication device (204) comprises a device-to-device, D2D, user equipment, UE.

14. The system according to any previous claims, wherein said secret key comprises at least one of a root key, a key derived from said root key, an encryption key, and an integrity key.

15. The system according to any previous claims, wherein said at least communication interface (806) comprises a PC5 interface between said first wireless communication device (202) and said second wireless communication device (204).
